(19) Europäisches Patentamt
European Patent Office
Office européen des brevets

(11) EP 3 448 946 B1

(12) **FASCICULE DE BREVET EUROPEEN**

(45) Date de publication et mention de la délivrance du brevet:
**15.07.2020 Bulletin 2020/29**

(21) Numéro de dépôt: **17725291.3**

(22) Date de dépôt: **02.05.2017**

(51) Int Cl.:
***C09D 183/06*** *(2006.01)* ***C08F 299/08*** *(2006.01)*
***C08G 77/08*** *(2006.01)*

(86) Numéro de dépôt international:
**PCT/FR2017/000079**

(87) Numéro de publication internationale:
**WO 2017/187030 (02.11.2017 Gazette 2017/44)**

(54) **PROCEDE DE PREPARATION D'ORGANOPOLYSILOXANES AVEC DES FONCTIONS (METH)ACRYLATES**

VERFAHREN ZUR HERSTELLUNG VON ORGANOPOLYSILOXANEN MIT (METH)ACRYLATFUNKTIONEN

METHOD FOR THE PREPARATION OF ORGANOPOLYSILOXANES HAVING (METH)ACRYLATE FUNCTIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.04.2016 FR 1600717**

(43) Date de publication de la demande:
**06.03.2019 Bulletin 2019/10**

(73) Titulaire: **ELKEM SILICONES France SAS**
**69003 Lyon (FR)**

(72) Inventeurs:
- **MALIVERNEY, Christian**
  **69690 Saint Julien sur Bibost (FR)**
- **BACHIR, Hassene**
  **69120 Vaulx en Velin (FR)**

(56) Documents cités:
**WO-A2-01/77240 FR-A1- 2 632 960**

- **"Brain Research Young Investigator Awards ED - Lansky Petr; Rospars Jean-Pierre; Christodoulou Chris", BRAIN RESEARCH, ELSEVIER, AMSTERDAM, NL, vol. 1097, no. 1, 30 juin 2006 (2006-06-30), page vii, XP005531608, ISSN: 0006-8993, DOI: 10.1016/S0006-8993(06)01601-5**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 448 946 B1

## Description

La présente invention concerne un procédé de préparation d'organopolysiloxanes fonctionnalisés par des groupes (méth)acrylates, de préférence acrylates. Pour l'ensemble du document il faut comprendre que les groupes (méth)acrylates comprennent les groupes acrylates, les groupes méthacrylates ou un mélange des deux.

Ces fonctionnalités (méth)acrylates sont présentes dans des radicaux hydrocarbonés liés à la chaîne polysiloxane par une liaison Si-C qui peut être présente dans la chaîne ou en bout de chaîne. Ces fonctions ester d'acide (méth)acrylique sont aptes à réagir par voie radicalaire sous activation actinique et/ou thermique selon un mécanisme de polymérisation par polyaddition.

Ces organopolysiloxanes à fonction (méth)acrylate sont largement utilisés dans des compositions silicones réticulables par voie radicalaire pour produire un élastomère, qui peuvent être éventuellement enduites en couche mince sur un support souple qui est en textile, en papier, en polychlorure de vinyle (PVC), en polyester, en polypropylène, en polyamide, en polyéthylène, en polyéthylène téréphtalate (PET), en polyuréthane ou en fibres de verre non tissés.

L'enduction de formulations silicones sur des supports souples vise de nombreuses applications. Par exemple, lorsque le support souple est un textile, des propriétés d'hydrofugation sont visées ou lorsque le support est un papier ou un polymère de type PVC ou PET des propriétés d'anti-adhérence sont le plus souvent recherchées.

Les revêtements anti-adhérents sont utiles pour de nombreuses applications où il est nécessaire de rendre non- adhérent à d'autres matériaux une surface ou un matériau qui normalement adhérerait à eux. Par exemple, les compositions silicones sont utilisées comme revêtements pour papiers anti-adhérents et peuvent ainsi être associées à des éléments adhérents pouvant être facilement libérés sans perdre leurs propriétés adhérentes, ces éléments pouvant être des adhésifs sensibles à la pression pour étiquettes, stratifiés décoratifs, ruban de transfert, etc. Les revêtements anti-adhérents à base de silicone appliqués sur papier, polyéthylène, polypropylène, polyester et autres supports de ce type, sont également utiles comme surfaces anti-adhérentes pour des produits à usage alimentaire et notamment dans le secteur de l'emballage industriel.

Il existe par conséquent depuis longtemps un fort intérêt pour ces organopolysiloxanes à fonction (méth)acrylate et leur préparation peut s'envisager de différentes manières décrites dans l'art antérieur.

Il est connu que des organopolysiloxanes à fonction méth(acrylate) sont obtenus industriellement par réaction entre un organopolysiloxane fonctionnalisé par des groupes époxy et de l'acide (méth)acrylique en présence d'un catalyseur à base de chrome. L'acide (méth)acrylique réagit avec le groupe époxy pour former un monoester de l'acide (méth)acrylique comportant un groupe hydroxyle en position vicinale. Cette réaction est décrite dans l'exemple comparatif 2 du brevet FR 2632960 où un organopolysiloxane avec des fonctions époxy réagit avec l'acide acrylique en présence du 2-ethylhexanoate de chrome III comme catalyseur pour obtenir un organopolysiloxane avec des fonctions acrylates. Aucun solvant n'est utilisé pour la mise en œuvre de cette réaction et une durée de réaction de 30 heures à 100°C est décrite. Lorsque nous avons reproduit l'enseignement de cette référence nous avons constaté que le milieu réactionnel était hétérogène sûrement à cause du manque de solubilité du catalyseur dans les organopolysiloxanes. Dès que le milieu réactionnel n'est pas agité, un dépôt se forme ce qui est un inconvénient majeur pour sa mise en œuvre industrielle car les dépôts dans les installations peuvent conduire à des bouchages et il faut mettre en œuvre des systèmes de rinçage et de nettoyage de réacteurs et tuyaux complexes pour gérer ce risque. Le brevet EP 1276825-B1 nous enseigne également la préparation d'organopolysiloxanes à fonction acrylate par réaction entre un organopolysiloxane ayant des fonctionnalités époxy et l'acide acrylique en présence d'acétate de chrome(III) et de deux solvants dont un alcool. Néanmoins le rendement et la sélectivité de ce procédé peuvent être améliorés. De plus, les compositions comprenant les organopolysiloxanes à fonction acrylate obtenus selon l'enseignement du brevet EP 1276825 présentent une odeur désagréable gênante pour les utilisateurs de ces compositions.

Dans ce contexte, l'un des objectifs essentiels de la présente invention est de mettre au point un procédé de préparation d'organopolysiloxanes fonctionnalisés par des groupes (méth)acrylates avec un rendement amélioré et une durée de réaction optimisée, par exemple inférieure à 10 heures, et ne présentant pas d'odeur désagréable.

Un autre objectif essentiel de la présente invention est de fournir un procédé de préparation d'organopolysiloxanes fonctionnalisés par des groupes (méth)acrylates avec une mise en œuvre aisée lors de la production industrielle minimisant les risques de bouchage de l'installation.

Un autre objectif essentiel de la présente invention est de fournir un procédé de préparation d'organopolysiloxanes fonctionnalisés par des groupes (méth)acrylates dont la mise en oeuvre industrielle est maîtrisée en diminuant la concentration en catalyseur.

Un autre objectif essentiel de cette invention est de fournir un procédé de préparation d'organopolysiloxanes fonctionnalisés par des groupements (méth)acrylates où la longueur de chaîne des organopolysiloxanes n'est pas modifiée, c'est-à-dire où il n'y a pas de réactions de coupure et redistribution de liaisons siloxane (raccourcissement de chaînes) ni de réaction de pontage (allongement des chaînes) par exemple par la réaction secondaire entre un époxyde et la fonction hydroxyle de l'hydroxylacrylate ou par la polymérisation des époxydes.

Un autre objectif de cette invention est de fournir un procédé pour réaliser un revêtement silicone sur un substrat

avec de bonnes propriétés d'accrochage ou adhérence sur le substrat.

Tous ces objectifs, parmi d'autres, sont atteints par la présente invention qui concerne un procédé pour la préparation d'une composition **X** comprenant au moins un organopolysiloxane **A** comportant au moins un groupe (méth)acrylate, ledit procédé comprenant les étapes suivantes:

a) on fait réagir à une température comprise entre 50 et 130°C, de préférence entre 70 et 130°C et encore plus préférentiellement entre 90 et 125°C, au moins un organopolysiloxane **B** comprenant au moins un groupe époxy avec de l'acide acrylique ou de l'acide méthacrylique ou un mélange des deux, **en absence d'alcool** et en présence :

- d'un catalyseur **C** qui est un complexe de chrome au degré d'oxydation (III),
- d'au moins 4,5% poids par rapport au poids total du milieu réactionnel de cette étape a) d'un solvant **S** et
- d'au moins un inhibiteur de polymérisation de l'acide acrylique ou de l'acide méthacrylique,

b) on dévolatilise le milieu réactionnel obtenu à l'issue de l'étape a) et
c) on obtient ladite composition **X** comprenant au moins un organopolysiloxane **A**.

L'étape a) du procédé de préparation de la composition **X** selon l'invention est réalisée en absence d'alcool et notamment en absence de butanol.

Par le terme solvant, on entend un solvant non réactif. Par conséquent le solvant **S** est différent de l'organopolysiloxane **B**, de l'acide acrylique et de l'acide méthacrylique.

Selon un autre mode de réalisation, le procédé de préparation de la composition **X** selon l'invention est réalisé en absence d'acide carboxylique exempt de double liaison. Comme acide carboxylique exempt de double liaison on peut citer les acides alkylcarboxyliques ayant de 2 à 11 atomes de carbone. Des exemples de tels acides monocarboxyliques sont l'acide acétique, l'acide propionique, l'acide butyrique, l'acide valérique, l'acide pivalique, l'acide 2,2-diméthylbutyrique, l'acide 2,2diméthylvalérique, l'acide acétoacétique, l'acide isooctanecarboxylique, l'acide isododécanecarboxylique, l'acide scorbique et l'acide undécanoique et notamment d'acide acétique. De préférence, le procédé de préparation de la composition **X** selon l'invention est réalisé en absence d'acide acétique.

Le procédé de préparation de la composition **X** selon l'invention présente comme avantages d'obtenir un rendement amélioré en organopolysiloxane **A**. Il est du mérite des inventeurs d'avoir identifié que la mise en œuvre du procédé en absence de solvant alcoolique permet d'obtenir un meilleur rendement en organopolysiloxane **A**. De plus, ce procédé présente l'avantage d'avoir à l'étape a) un milieu réactionnel homogène et limpide simplifiant sa mise en œuvre industrielle, limitant le risque de bouchage des installations et par conséquent améliorant les conditions d'hygiène et sécurité. Par ailleurs, le procédé selon l'invention ne modifie pas la longueur de chaîne de l'organopolysiloxane **B** de départ tout en ayant un rendement et une durée compatible avec une production industrielle. Un autre avantage du procédé selon l'invention est que la composition **X** obtenue ne présente pas d'odeur désagréable.

Un autre avantage du procédé selon l'invention est qu'à l'étape a) du procédé un taux de conversion des groupes epoxy supérieur à 98% peut être obtenu en moins de six heures. L'homme du métier saura ajuster la durée de réaction de l'étape a) du procédé selon l'invention en fonction de la température pour obtenir un taux de conversion suffisant.

Selon un mode préférentiel de l'invention, la durée de l'étape a) est comprise entre une et cinq heures lorsque la température de l'étape a) est comprise entre 90 et 125°C.

L'organopolysiloxane **A** obtenu par le procédé de l'invention comprend des motifs siloxyles **(I.2)**, **(I.3)**, et éventuellement **(I.1)** de formules suivantes:

$$Y_a Z^1_b SiO_{\frac{4-(a+b)}{2}} \qquad \textbf{(I.1)}$$

$$Z^2_c SiO_{\frac{4-c}{2}} \qquad \textbf{(I.2)}$$

$$V_d Z^1_e SiO_{\frac{4-(d+e)}{2}} \qquad \textbf{(I.3)}$$

dans lesquelles :

- a= 1 ou 2, b= 0, 1 ou 2 et a+b= 1, 2 ou 3,
- c = 0,1, 2, ou 3,
- d= 1 ou 2, e= 0, 1 ou 2 et d+e= 1, 2 ou 3
- les symboles Y, identiques ou différents, représentent un groupe hydrocarboné comprenant un groupe époxy et comprenant éventuellement en outre un ou plusieurs hétéroatomes tel qu'un atome d'oxygène, ledit groupe hydrocarboné Y ayant de préférence de 2 à 20 atomes de carbone inclus, et, plus préférentiellement encore Y est choisi parmi le groupe constitué par un alkylglycidyléther, un époxyalkyle linéaire, ramifié ou cyclique, un époxyalcényle linéaire, ramifié ou cyclique et un glycidyl-ester d'acide carboxylique;
- les symboles $Z^1$ et $Z^2$, identiques ou différents, représentent, un groupe hydrocarboné monovalent ayant de 1 à 30 atomes de carbone et de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle, propyle, 3,3,3-trifluoropropyle, xylyle, toluyle et phényle,
- les symboles V, identiques ou différents, représentent un groupe hydrocarboné comprenant un groupe (méth)acrylate, ledit groupe hydrocarboné V ayant de préférence de 5 à 23 atomes de carbone inclus, et,
- ledit organopolysiloxane **A** comprend, par molécule, au moins deux atomes de silicium et au moins un motif siloxyle **(I.3)**.

L'organopolysiloxane **B** comprend des motifs siloxyles **(I.1)** et **(I.2)** de formules suivantes:

$$Y_aZ^1_bSiO_{\frac{4-(a+b)}{2}} \qquad \textbf{(I.1)}$$

et

$$Z^2_cSiO_{\frac{4-c}{2}} \qquad \textbf{(I.2)}$$

dans lesquelles :

- a= 1 ou 2, b= 0, 1 ou 2 et a+b= 1, 2 ou 3,
- c = 0, 1, 2 ou 3,
- les symboles Y, identiques ou différents, représentent un groupe hydrocarboné comprenant un groupe époxy et comprenant éventuellement en outre un ou plusieurs hétéroatomes tel qu'un atome d'oxygène, ledit groupe hydrocarboné Y ayant de préférence de 2 à 20 atomes de carbone inclus, et, plus préférentiellement encore Y est choisi parmi le groupe constitué par un alkylglycidyléther, un époxyalkyle linéaire, ramifié ou cyclique, un époxyalcényle linéaire, ramifié ou cyclique et un glycidyl-ester d'acide carboxylique;
- les symboles $Z^1$ et $Z^2$, identiques ou différents, représentent, un groupe hydrocarboné monovalent ayant de 1 à 30 atomes de carbone et de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle, propyle, 3,3,3-trifluoropropyle, xylyle, toluyle et phényle, et
- ledit organopolysiloxane **B** comprend, par molécule, au moins deux atomes de silicium et au moins un motif siloxyle **(I.1)**.

De préférence, pour le motif siloxyle **(I.1)** le symbole Y est choisi parmi le groupe constitué par les groupes hydrocarbonés **(R-1)** à **(R-6)** de formules suivantes :

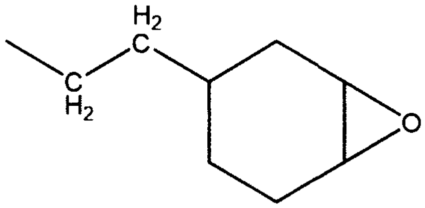

**(R-1)**

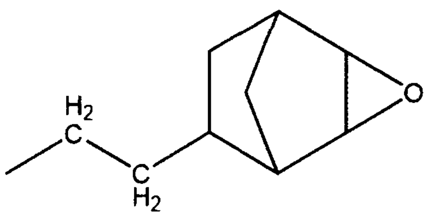

**(R-2)**

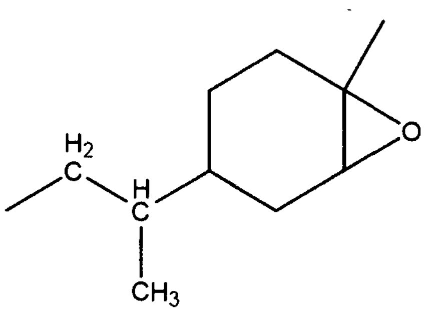

**(R-3)**

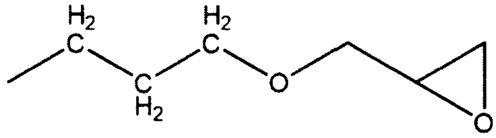

**(R-4)**

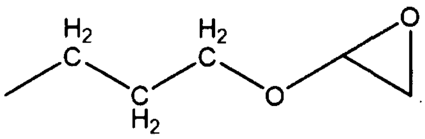

**(R-5)**

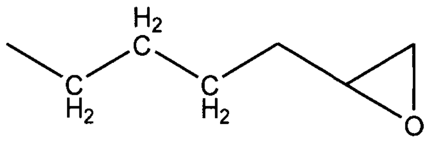

**(R-6)**

Selon un mode de réalisation particulièrement préféré, dans le motif siloxyle **(I.1)** le symbole Y est le groupe hydrocarboné **(R-4)** de formule suivante :

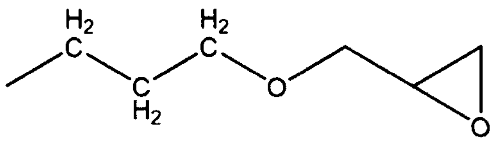

**(R-4)**

Ces organopolysiloxanes **B** peuvent présenter une structure linéaire, ramifiée, ou cyclique et leur degré de polymérisation est compris entre 2 et 5000, de préférence entre 2 et 1000 et encore plus préférentiellement entre 2 et 500.

De préférence l'organopolysiloxane **B** a une structure linéaire et comprend des motifs siloxyles **(I.1)** et **(I.2)** de formules suivantes:

$$Y_a Z^1_b SiO_{\frac{4-(a+b)}{2}} \quad \textbf{(I.1)}$$

$$Z^2_c SiO_{\frac{4-c}{2}} \quad \textbf{(I.2)}$$

dans lesquelles :

- a= 1 ou 2, b= 0, 1 ou 2 et a+b= 2 ou 3,
- c = 2 ou 3,
- les symboles Y, identiques ou différents, représentent un groupe hydrocarboné comprenant un groupe époxy et comprenant éventuellement en outre un ou plusieurs hétéroatomes tel qu'un atome d'oxygène, ledit groupe hydrocarboné Y ayant de préférence de 2 à 20 atomes de carbone inclus, et, plus préférentiellement encore Y est choisi parmi le groupe constitué par un alkylglycidyléther, un époxyalkyle linéaire, ramifié ou cyclique, un époxyalcényle linéaire, ramifié ou cyclique et un glycidyl-ester d'acide carboxylique;
- les symboles $Z^1$ et $Z^2$, identiques ou différents, représentent, un groupe hydrocarboné monovalent ayant de 1 à 30 atomes de carbone et de préférence choisi parmi le groupe constitué par les groupes alkyles ayant de 1 à 8 atomes de carbone et les groupes aryles ayant de 6 à 12 atomes de carbone, et encore plus préférentiellement choisis

parmi le groupe constitué par un groupe méthyle, éthyle, propyle, 3,3,3-trifluoropropyle, xylyle, toluyle et phényle, et

- ledit organopolysiloxane **B** comprenant, par molécule, au moins deux atomes de silicium et au moins un motif siloxyle **(I.1)**.

Lorsqu'il s'agit d'un polymère linéaire, l'organopolysiloxane **B** est essentiellement constitué de motifs siloxyles « D » choisis parmi le groupe constitué par les motifs siloxyles $Y_2SiO_{2/2}$, $YZ^1SiO_{2/2}$ et $Z^2{}_2SiO_{2/2}$, et de motifs siloxyles « M » choisis parmi le groupe constitué par les motifs siloxyles $Y_3SiO_{1/2}$, $YZ^1{}_2SiO_{1/2}$, $Y_2Z^1SiO_{1/2}$ et $Z^2{}_3SiO_{1/2}$. Les symboles Y, $Z^1$ et $Z^2$ sont tels que décrits ci-dessus.

Selon un mode préféré de l'invention, l'organopolysiloxane **B** est essentiellement constitué de motifs siloxyles « D » choisis parmi le groupe constitué par les motifs siloxyles $YZ^1SiO_{2/2}$ et $Z^2{}_2SiO_{2/2}$, et de motifs siloxyles « M » choisis parmi le groupe constitué par les motifs siloxyles $YZ^1{}_2SiO_{1/2}$ et $Z^2{}_3SiO_{1/2}$. Les symboles Y, $Z^1$ et $Z^2$ sont tels que décrits ci-dessus.

L'organopolysiloxane **B** présente une viscosité dynamique à 25°C comprise entre 1 et 100000 mPa.s, de préférence entre 10 et 50000 mPa.s. et encore plus préférentiellement entre 10 et 10000 mPa.s.

Toutes les viscosités dont il est question dans le présent exposé correspondent à une grandeur de viscosité dynamique à 25°C dite "Newtonienne", c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

Selon un mode préférentiel de l'invention, l'organopolysiloxane **B** contient par molécule de 1 à 100 motifs siloxyle **(I.1)** porteur d'au moins un groupe hydrocarboné comprenant un groupe époxy. Selon un mode plus préférentiel l'organopolysiloxane **B** contient par molécule de 2 à 50 motifs siloxyle **(I.1)** et plus préférentiellement l'organopolysiloxane **B** contient par molécule encore de 2 à 15 motifs siloxyle **(I.1)**.

Selon un autre mode de réalisation l'organopolysiloxane **B** contient de 1 à 60% poids de groupes hydrocarbonés Y comprenant un groupe époxy, de préférence de 1 à 30% poids et encore plus préférentiellement de 1 à 15% poids.

Selon un mode préférentiel de mise en œuvre du procédé selon l'invention, l'organopolysiloxane **B** est choisi parmi les composés de formules **(B-1)** à **(B-4)** suivantes :

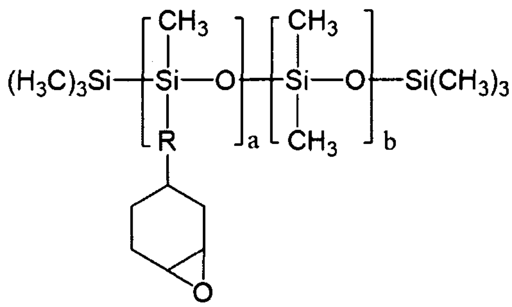

**(B-1)** dans laquelle R est un groupe alkyle comprenant de 2 à 5 atomes de carbone, a est compris entre 2 et 50 et préférentiellement entre 2 et 15 et b est compris entre 20 et 400.

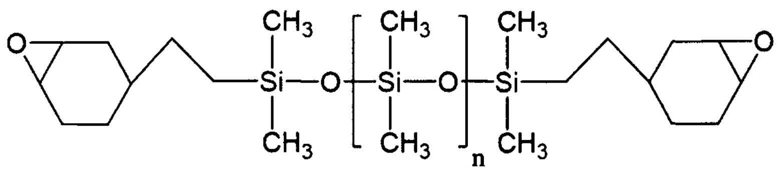

**(B-2)** dans laquelle n est compris entre 0 et 250.

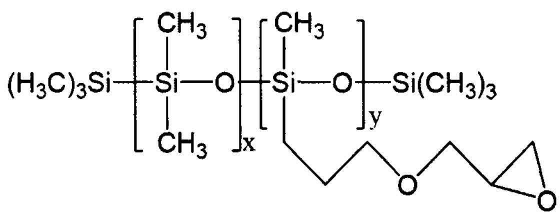

**(B-3)** dans laquelle x est compris entre 10 et 300 et y est compris entre 2 et 30, de préférence entre 2 et 15, et

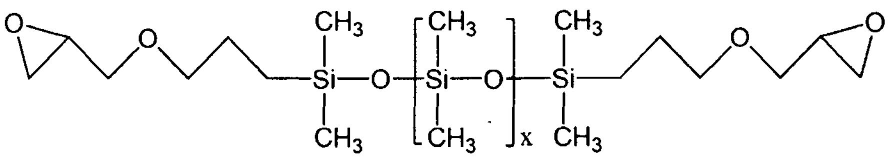

**(B-4)** dans laquelle x est compris entre 0 et 250.

Selon les applications envisagées pour l'organopolysiloxane **A**, un taux de conversion des fonctions époxy de l'organopolysiloxane **B** total ou partiel peut être recherché. Il peut ainsi être obtenu un organopolysiloxane **A** comprenant des fonctions époxy et des fonctions (méth)acrylate qui peut être utilisé par exemple comme modulateur d'adhésion ou comme promoteur d'adhésion ou un organopolysiloxane **A** comprenant uniquement ou essentiellement des fonctions (méth)acrylate utilisé par exemple comme constituant essentiel des compositions silicones réticulables par voie radicalaire pour produire un élastomère. Le ratio molaire **R** entre l'acide (méth)acrylique et les fonctions époxy de l'organopolysiloxane **B** mis en œuvre dans le procédé sera adapté en conséquence.
Selon un mode de réalisation du procédé selon l'invention, à l'étape a) le ratio molaire **R** entre l'acide (méth)acrylique et le ou les groupes époxy portés par l'organopolysiloxane **B** est supérieur à 1 et de préférence compris entre 1,05 et 1,50, et encore plus préférentiellement compris entre 1,05 et 1,20.
Pour l'ensemble du document l'acide (méth)acrylique comprend l'acide acrylique et l'acide méthacrylique.
Selon un mode de réalisation préféré du procédé selon l'invention, à l'étape a) le ratio molaire **R** entre l'acide acrylique et le ou les groupes époxy portés par l'organopolysiloxane **B** est supérieur à 1 et de préférence compris entre 1,05 et 1,50, et encore plus préférentiellement compris entre 1,05 et 1,20.
Le catalyseur **C** est un complexe de chrome au degré d'oxydation (III).
De préférence le catalyseur **C** est un complexe de chrome de de formule **(1)** suivante :

$[Cr(L^1)_3]$ **(1)**

dans laquelle les symboles $L^1$, identiques ou différents, représentent un anion carboxylate.
Selon un mode de réalisation de l'invention, le catalyseur **C** est un carboxylate de chrome (III) de formule **(1)** suivante :

$[Cr(L^1)_3]$ **(1)**

dans laquelle les symboles $L^1$ sont des ligands, identiques ou différents, choisis dans le groupe des anions carboxylates, ayant de 1 à 40 atomes de carbone.
Les ligands carboxylates $L^1$ utiles selon l'invention sont par exemple :

- les anions dérivés des acides carboxyliques aliphatiques tels que les anions: méthanoate ou formiate $[H\text{-}COO]^-$, éthanoate ou acétate $[CH_3\text{-}COO]^-$, propanoate ou propionate $[CH_3CH_2\text{-}COO]^-$, butanoate ou butyrate $[CH_3\text{-}(CH_2)_2\text{-}COO]^-$, pentanoate ou valerate $[CH_3\text{-}(CH_2)_3\text{-}COO]^-$, hexanoate ou caproate $[CH_3\text{-}(CH_2)_4\text{-}COO]^-$, heptanoate $[CH_3\text{-}(CH_2)_5\text{-}COO]^-$, octanoate $[Ch_3\text{-}(CH_2)_6\text{-}COO]^-$, 2-éthylhexanoate $[CH_3\text{-}(CH_2)_4\text{-}CH(C_2H_5)\text{-}COO]^-$, nonanoate $[CH_3\text{-}(CH_2)_7\text{-}COO]^-$. décanoate $[CH_3\text{-}(CH_2)_8\text{-}COO]^-$, undécanoate $[CH_3\text{-}(CH_2)_9\text{-}COO]^-$, dodécanoate ou laurate $[CH_3\text{-}(CH_2)_{10}\text{-}COO]^-$, tridécanoate $[CH_3\text{-}(CH_2)_{11}\text{-}COO]^-$, tétradécanoate ou myristate $[CH_3\text{-}(CH_2)_{12}\text{-}COO]^-$, pentadécanoate $[CH_3\text{-}(CH_2)_{13}\text{-}COO]^-$, hexadécanoate ou palmitate $[CH_3\text{-}(CH_2)_{14}\text{-}COO]^-$, heptadécanoate $[CH_3\text{-}(CH_2)_{15}\text{-}COO]^-$ octadécanoate ou stéarate $[CH_3\text{-}(CH_2)_{16}\text{-}COO]^-$, nonadécanoate $[CH_3\text{-}(CH_2)_{17}\text{-}COO]^-$, éicosanoate $[CH_3\text{-}(CH_2)_{18}\text{-}COO]^-$, hénéicosanoate $[CH_3\text{-}(CH_2)_{19}\text{-}COO]^-$, docosanoate ou béhénate $[CH_3\text{-}(CH_2)_{20}\text{-}COO]^-$, tricosanoate $[CH_3\text{-}(CH_2)_{21}\text{-}COO]^-$, tétracosanoate ou lignocérate $[CH_3\text{-}(CH_2)_{22}\text{-}COO]^-$, pentacosanoate $[CH_3\text{-}(CH_2)_{23}\text{-}COO]^-$, hexacosanoate $[CH_3\text{-}(CH_2)_{24}\text{-}COO]^-$, acide heptacosanoate $[CH_3\text{-}(CH_2)_{25}\text{-}COO]^-$, octacosanoate $[CH_3\text{-}(CH_2)_{26}\text{-}COO]^-$, nonacosanoate $[CH_3\text{-}(CH_2)_{27}\text{-}COO]^-$, triacontanoate $[CH_3\text{-}(CH_2)_{28}\text{-}COO]^-$, hentriacontanoate $[CH_3\text{-}(CH_2)_{29}\text{-}COO]^-$ , dotriacontanoate $[CH_3\text{-}(CH_2)_{30}\text{-}COO]^-$, palmitoléate $[CH_3\text{-}(CH_2)_5\text{-}CH{=}CH\text{-}(CH_2)_7\text{-}COO]^-$, oléate $[CH_3(CH_2)_7CH{=}CH(CH_2)_7COO]^-$, linoléate $[CH_3\text{-}(CH_2)_4\text{-}(CH{=}CHCH_2)_2\text{-}(CH_2)_6\text{-}COO]^-$, linolénate $[CH_3\text{-}CH_2\text{-}(CH{=}CHCH_2)_3\text{-}(CH_2)_6\text{-}COO]^-$, arachidonate $[CH_3\text{-}(CH_2)_4\text{-}(CH{=}CHCH_2)_4\text{-}(CH_2)_2\text{-}COO]^-$,
- les anions dérivés des acides carboxyliques aliphatiques substitués tels que par exemple le néopentanoate ou pivalate $[(CH_3)_3C\text{-}COO]^-$, le néononanoate $[(CH_3)_3C\text{- -}(CH_2)_4\text{-}COO]^-$, ou encore les isomères de structure en $C_{10}$ suivants, pris seuls ou en mélange (néodécanoate): 7,7-diméthyloctanoate $[(CH_3)_3C\text{-}(CH_2)_5\text{-}COO]^-$, 2,2-diméthy-

loctanoate $[CH_3-(CH_2)_5-C(CH_3)_2-COO]^-$, 2,2,3,5-tétraméthylhexanoate $[(CH_3)_2CH-CH_2-CH(CH_3)-C(CH_3)_2-COO]^-$, 2,5-diméthyl-2-éthylhexanoate $[(CH_3)_2CH-(CH_2)_2-C(CH_3)(C_2H_5)-COO]^-$, 2,2-diéthylhexanoate $[CH_3-(CH_2)_3-C(C_2H_5)_2-COO]^-$, 2,4-diméthyl-2-isopropylpentanoate $[(CH_3)_2CH-CH_2-C(CH_3)(i\text{-}propyl)-COO]^-$,

- les anions carboxylates correspondant de l'acide VersaticTM 10 (vendu par la société Momentive) de formule brute $[C_{10}H_{19}O_2]^-$ et de formule linéaire $[(R_1)(R_2)C(CH3)-COO]^-$ avec les symboles $R_1$ et $R_2$ qui sont des alkyles,
- les anions dérivés des acides carboxyliques aromatiques tels que les anions de type benzoate, phénylacétate, phénylpropionate ou phénylbutyrate,
- les anions dérivés des acides carboxyliques comprenant une insaturation comme l'anion acrylate, l'anion méthacrylate, et
- les anions naphténate.

Les anions naphthénates en $C_{10}$ à $C_{20}$ sont les anions correspondant des acides naphthéniques. Les acides naphthéniques sont des sous-produits de l'extraction des sables bitumineux et se retrouvent principalement dans les résidus de sables bitumineux. Les mélanges commerciaux d'acides naphthéniques sont utilisés comme solvants, détergents et agents de récupération de caoutchouc. Il peut s'agir de mélange d'acides carboxyliques monocycliques et/ou bicycliques.

Selon un mode de réalisation du procédé, il est préférable que les ligands n'aient pas un poids moléculaire trop élevé. Par conséquent, selon un mode préférentiel les ligands carboxylates ont de 1 à 20 atomes de carbone, et encore plus préférentiellement de 1 à 12 atomes de carbone.

Selon un mode de réalisation particulièrement avantageux, le catalyseur C est un carboxylate de chrome au degré d'oxydation (III) choisi parmi le groupe constitué par l'acrylate de chrome (III), le méthacrylate de chrome (III), l'acétate de chrome (III), le 2-ethylhexanoate de chrome (III), le néodécanoate de chrome (III) et leurs mélanges.

Selon un autre mode de réalisation du procédé selon l'invention, le carboxylate de chrome(III) peut être généré in-situ.

Selon un mode de réalisation, la concentration en catalyseur C exprimée en % molaire par rapport aux groupes époxy de l'organopolysiloxane **B** est comprise entre 0,05 et 1%, de préférence entre 0,05 et 0,5%, plus préférentiellement entre 0,05 et 0,3% et encore plus préférentiellement entre 0,05 et 0,25%.

Un autre avantage du procédé selon l'invention est qu'il est possible d'utiliser une faible quantité de catalyseur.

Selon un mode préféré de l'invention à l'étape a) le solvant **S** est choisi parmi le groupe constitué par la méthylisobutylcétone, la méthyléthylcétone, le toluène, le xylène, le chlorobenzène et leurs mélanges.

De préférence il n'y a pas dans le procédé selon l'invention d'autre solvant que le solvant **S** choisi parmi le groupe constitué par la méthylisobutylcétone, la méthyléthylcétone, le toluène, le xylène, le chlorobenzène et leurs mélanges.

Plus préférentiellement le solvant **S** est la méthylisobutylcétone.

Encore plus préférentiellement dans le procédé selon l'invention il n'y a pas d'autre solvant que la méthyisobutylcétone.

Selon un mode de réalisation du procédé selon l'invention, la teneur en solvant **S** mise en œuvre à l'étape a) du procédé tel que décrit ci-dessus est comprise entre 4,5 et 20% massique, de préférence entre 4,5 et 15% massique, plus préférentiellement entre 5 et 15% massique, et encore plus préférentiellement entre 5 et 13% massique par rapport au poids total du milieu réactionnel mis en oeuvre à ladite étape a) du procédé.

Si la quantité de solvant **S** est inférieure à 4,5% massique par rapport au poids total du milieu réactionnel mis en oeuvre à l'étape a) du procédé selon l'invention, le milieu réactionnel de l'étape a) est hétérogène ce qui complique sa mise en œuvre industrielle car des risques d'encrassement et de bouchage des conduites industrielles apparaissent.

Si la quantité de solvant **S** est supérieure à 20% massique par rapport au poids total du milieu réactionnel mis en œuvre à l'étape a) du procédé selon l'invention, la durée de réaction nécessaire pour atteindre un taux de conversion des groupes époxy supérieur à 98% pourrait augmenter.

Selon un mode préférentiel de mise en œuvre de l'invention à l'étape a) le catalyseur **C**, l'inhibiteur de polymérisation de l'acide (méth)acrylique, le solvant S et une partie ou la totalité de l'acide (méth)acrylique peuvent être pré-mélangés avant l'ajout de l'organopolysiloxane **B**.

Dans le procédé selon l'invention à l'étape a) on introduit un inhibiteur de polymérisation de l'acide (méth)acrylique. Les inhibiteurs de polymérisation de l'acide (méth)acrylique sont largement connus et à titre d'exemple nous pouvons citer les composés phénoliques comme le 4-méthoxyphenol, l'hydroquinone et la méthylhydroquinone, ou les alkyldiphénylamines comme par exemple la phénothiazine. De préférence, on utilise comme inhibiteur de polymérisation de l'acide (méth)acrylique l'éther méthylique de l'hydroquinone (MEHQ) ou 4-méthoxyphénol. Selon un mode préférentiel la quantité d'inhibiteur de polymérisation mise en oeuvre est comprise entre 0,01 et 1% poids par rapport à l'organopolysiloxane **B** et encore plus préférentiellement entre 0,01 et 0,5%.

A l'étape b) du procédé selon l'invention le milieu réactionnel obtenu à l'issue de l'étape a) est dévolatilisé. Pour cela le milieu réactionnel issu de l'étape a) est chauffé à une température comprise entre 80 et 130°C sous pression

réduite. Cette étape de dévolatilisation permet d'évaporer le solvant **S** et l'acide (meth)acrylique en excès.

Le solvant **S** mis en oeuvre dans le procédé selon l'invention peut être recyclé.

Selon un autre mode de réalisation, une étape de filtration peut en outre être réalisée avant ou après l'étape b). De préférence, si une étape de filtration est ajoutée au procédé selon l'invention elle a lieu après l'étape b).

Selon un autre mode de réalisation de l'invention, le procédé selon l'invention est constitué des étapes suivantes:

a) on fait réagir à une température comprise entre 50 et 130°C, de préférence entre 70 et 130°C et encore plus préférentiellement entre 90 et 125°C, au moins un organopolysiloxane **B** comprenant au moins un groupe époxy avec de l'acide acrylique ou de l'acide méthacrylique ou un mélange des deux, **en absence d'alcool** et en présence :

- d'un catalyseur **C** qui est un complexe de chrome au degré d'oxydation (III),
- d'au moins 4,5% poids par rapport au poids total du milieu réactionnel de cette étape a) d'un solvant **S** et
- d'au moins un inhibiteur de polymérisation de l'acide acrylique ou de l'acide méthacrylique,

b) on dévolatilise le milieu réactionnel obtenu à l'issue de l'étape a),
c) éventuellement on filtre le milieu réactionnel obtenu à l'issue de l'étape b), et
d) on obtient ladite composition **X** comprenant au moins un organopolysiloxane **A**.

Lors de la mise en œuvre du procédé, il est possible mais pas nécessaire de réaliser les étapes a) et b) sous atmosphère inerte. Selon un mode de réalisation préféré, lorsqu'on met en œuvre un composé phénolique comme inhibiteur d'acide (méth)acrylique les étapes a) et b) du procédé seront mises en œuvre sous air et encore plus préférentiellement sous un balayage d'air sec.

Un autre objet de l'invention concerne la composition **X** susceptible d'être obtenue par le procédé décrit ci-dessus.

Un dernier objet de l'invention concerne un procédé pour réaliser un revêtement sur un substrat comprenant les étapes suivantes :

a) on prépare une composition **X** selon le procédé tel que décrit ci-dessus,
b) on prépare une composition silicone **W** réticulable par voie radicalaire comprenant :

i. ladite composition **X**
ii. un photoamorceur, et
iii. éventuellement au moins un additif,

c) on applique ladite composition **W** sur un substrat, et
d) on fait réticuler ladite composition **W** par exposition à un rayonnement.

De préférence, le substrat est un support souple en textile, en papier, en polychlorure de vinyle, en polyester, en polypropylène, en polyamide, en polyéthylène, en polyéthylène téréphtalate, en polyuréthane ou en fibres de verre non tissés.

Selon un mode préféré de l'invention à l'étape d) le rayonnement est de la lumière ultraviolette de longueur d'onde inférieure à 400 nanomètres.

La durée d'irradiation peut être courte et elle est généralement inférieure à 1 seconde et est de l'ordre de quelques centièmes de seconde pour les faibles épaisseurs de revêtement. La réticulation obtenue est excellente même en l'absence de tout chauffage.

Selon un autre mode réalisation l'étape d) de réticulation a lieu à une température comprise entre 40 et 100°C.

Bien entendu, on peut régler le temps de durcissement notamment, par le nombre de lampes U.V. utilisées, par la durée d'exposition aux U.V. et par la distance entre la composition et la lampe U.V.

La quantité de composition **W** déposée sur le substrat est variable et s'échelonne le plus souvent entre 0,1 et 5 g/$m^2$ de surface traitée. Cette quantité dépend de la nature du support et des propriétés anti-adhérentes recherchées. Elle est le plus souvent comprise entre 0,5 et 1,5 g/$m^2$.

Ce procédé est particulièrement adapté pour préparer un revêtement silicone anti-adhérent sur un substrat qui est un support souple en textile, en papier, en polychlorure de vinyle, en polyester, en polypropylène, en polyamide, en polyéthylène, en polyéthylène téréphtalate, en polyuréthane ou en fibres de verre non tissés.
Ces revêtements sont particulièrement adaptés pour leur utilisation dans le domaine de l'anti-adhérence.

Pour polymériser des organopolysiloxanes fonctionnalisées par des groupements (méth)acrylate, l'homme du métier saura choisir un photoamorceur radicalaire approprié absorbant les radiations lumineuses de longueur d'onde inférieure à 400 nm. Comme exemple de photoamorceurs radicalaires on peut citer: les $\alpha$-hydroxycétones, les benzoïnes

éther et les cétones $\alpha$-amino aromatiques . A titre d'exemples de photoamorceur radicalaire, on citera notamment les produits suivants: isopropylthioxanthone ; benzophénone ; camphorquinone ; 9-xanthénone; anthraquinone ; 1-4 dihydroxyanthraquinone; 2-méthylanthraquinone; 2,2'-bis(3-hydroxy-1,4-naphtoquinone); 2,6-dihydroxyanthraquinone ; 1-hydroxycyclohexylphénylcétone ;1,5-dihydroxyanthraquinone; 1,3-diphényl-1,3-propanedione; 5,7-dihydroxyflavone; dibenzoylperoxyde; acide 2-benzoylbenzoique; 2-hydroxy-2-méthylpropiophénone; 2-phénylacétophénone; oxyde de 2,4,6-triméthylbenzoyldiphénylphosphine; anthrone; oxyde de bis(2,6 diméthylbenzoyl)-2,4,4-triméthylpentylphosphine ; 4,4'-diméthoxybenzoïne; phénanthrènequinone; 2-éthylanthraquinone; 2-méthylanthraquinone; 1,8-dihydroxyanthraquinone; dibenzoylperoxyde; 2,2-diméthoxy-2-phénylacétophénone; benzoïne; 2-hydroxy-2-méthylpropiophénone; benzaldéhyde; 4-(2-hydroxyéthoxy)phényl-(2-hydroxy-2-méthylpropyl) cétone; benzoylacétone, éthyl(2,4, 6-trimethylbenzoyl)phenylphosphinate et leur mélanges.

A titre d'exemples de produits commerciaux de photoamorceurs radicalaires, on peut citer les produits commercialisés par la société CIBA-GEIGY : Irgacure® 369, Irgacure® 651, Irgacure® 907, Darocure® 1173, etc.

La quantité de photoamorceur dans la composition **W** est généralement comprise entre 0,001 et 5 parties en poids, le plus souvent entre 0,005 et 3 parties en poids pour 100 parties en poids de la composition **W**.

Comme additif, on peut inclure au moins un additif de régulation de la force de décollement d'une interface silicone/adhésif dans la composition qui est choisi parmi :

(i) les dérivés organiques (méth)acrylates, et
(ii) les silicones à fonction(s) (méth)acrylate(s).

Conviennent notamment comme dérivés organiques (méth)acrylates, les composés (méth)acrylates époxydés, (meth)acryloglycéropolyesters, (méth)acrylo-urétanes, (méth)acrylopolyéthers, (méth)acrylopolyesters, et (méth)acrylo-acryliques. Sont plus particulièrement préférés le triacrylate de triméthylolpropane, le diacrylate de tripropylène glycol et le tétraacrylate de pentaérythritol.

Selon une variante préférée de l'invention, l'additif utilisé est un silicone à fonction(s) (méth)acrylate(s). A titre représentatif de fonctions (méth)acrylates portées par le silicone et convenant tout particulièrement à l'invention, on peut plus particulièrement citer les dérivés acrylates, méthacrylates, éthers de (méth)acrylates et esters de méth(acrylates) liés à la chaîne polysiloxane par une liaison Si-C. De tels dérivés acrylates sont notamment décrits dans les brevets EP 281 718, FR 2 632 960 et EP 940 458.

D'autres additifs tels que des thiols ou des amines aromatiques peuvent être ajoutés pour accélérer la réticulation de la composition **W**.

Un dernier objet de l'invention concerne un substrat comportant au moins un revêtement susceptible d'être obtenu selon le procédé tel que décrit ci-dessus.

La présente invention est illustrée ci-après par des exemples non limitatifs.

**Exemples :**

**1- Préparation des compositions comprenant des organopolysiloxanes comportant des groupes acrylates.**

Dans un réacteur de 250 ml muni d'une agitation par barreau magnétique, d'un réfrigérant, d'une arrivée d'air et d'une gaine thermométrique, sont chargés sous agitation :

- 130 g d'une huile polydiméthylsiloxane **H** fonctionnalisé par des groupes époxy avec une viscosité dynamique à 25 °C d'environ 60 mPa.s. Cette huile contient des groupe hydrocarbonés Y comprenant un groupe époxy de formule **(R-4)** suivante :

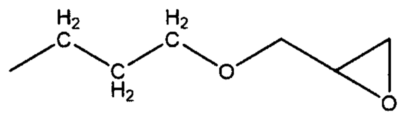

**(R-4)**

La teneur molaire en époxy dans l'huile **H** est de 232 mmol pour 100g ce qui correspond à une quantité de groupes époxy par molécule comprise entre 2 et 15.

- 25 g d'acide acrylique,

- 0,086 g d'acétate de chrome III,
- 0,039 g d'éther méthylique de l'hydroquinone (MEHQ), et
- des quantités variables de solvant (voir tableau 1).

L'agitation est ajustée à 700 tours/min, puis le réacteur est chauffé à 115°C avec une plaque chauffante en aluminium pendant qu'un débit d'air d'environ 130 ml/h est maintenu. Des prélèvements sont réalisés au cours du temps pour mesurer le taux de conversion (ou de transformation) des groupes époxy par potentiométrie. Après 3h30 de réaction le mélange est dévolatilisé sous vide (progressivement jusqu'à 1 mbar) tout en maintenant un bullage d'air pour évaporer l'acide acrylique qui n'a pas été consommé et les solvants de la réaction. Après refroidissement, la composition obtenue est filtrée sous pression sur filtre en cellulose. Les fonctions acrylate sont dosées par RMN $^1H$.

Le rendement d'acrylatation est calculé comme le ratio entre le nombre de moles d'acrylate dosé dans la composition et le nombre de moles d'époxy introduit initialement multiplié par 100.

La sélectivité d'acrylatation est égale au rendement d'acrylatation sur le taux de conversion des groupes époxy. L'objectif recherché étant d'obtenir une sélectivité la plus élevée possible

Les résultats sont présentés dans le tableau 1 suivant.

**Tableau 1**

| Essais | Solvant MIBK (% pds) | Solvant n-butanol (% pds) | Milieu réactionnel | Taux conversion epoxy (%) | Rendement acrylatation (%) | Sélectivité acrylatation (mol%) |
|---|---|---|---|---|---|---|
| Comparatif 1 | 4,6 | 5,7 | Homogène & limpide | 98,5 | 93 | 94,4 |
| Comparatif 2 | 0 | 0 | Hétérogène et trouble | 99 | 96,5 | 97,5 |
| Comparatif 3 | 2 | 0 | Hétérogène et trouble à | nd | nd | nd |
| Comparatif 4 | 4 | 0 | Légèrement Hétérogène et trouble | 99,1 | 97,6 | 98,5 |
| Invention 2 | 7 | 0 | Homogène & limpide | 98,8 | 98,4 | 99,6 |
| Invention 3 | 10 | 0 | Homogène & limpide | 98,5 | 97,2 | 98,7 |

Ces essais montrent que le procédé selon l'invention permet d'obtenir un bon rendement et une bonne sélectivité d'acrylatation avec un milieu réactionnel homogène et limpide à l'étape a) du procédé. La composition obtenue après dévolatilisation est également homogène et ne présente pas d'odeur désagréable.

Pour l'essai comparatif 1 en présence de deux solvants (MIBK et n-butanol) le milieu réactionnel est homogène et limpide mais la sélectivité d'acrylatation est inférieure à 95% et le rendement d'acrylatation n'est que de 93%.De plus la composition obtenue présente une odeur désagréable.

Pour les essais comparatifs 2, 3 et 4, le milieu réactionnel est trouble et hétérogène ce qui n'est pas souhaitable pour une mise en œuvre industrielle.

**Tableau 2**

| Essais | Solvant MIBK (% pds) | Solvant n-butanol (% pds) | Viscosité $mPa.s^{-1}$ | Mw g/mol |
|---|---|---|---|---|
| Comparatif 1 | 4,6 | 5,7 | 570 | 3790 |
| Comparatif 2 | 0 | 0 | 673 | 4500 |
| Comparatif 3 | 2 | 0 | nd | nd |
| Comparatif 4 | 4 | 0 | 675 | 4500 |

(suite)

| Essais | Solvant MIBK (% pds) | Solvant n-butanol (% pds) | Viscosité $mPa.s^{-1}$ | Mw g/mol |
|---|---|---|---|---|
| Invention 2 | 7 | 0 | 656 | 4350 |
| Invention 3 | 10 | 0 | 648 | 4170 |

Pour caractériser les compositions obtenues lors de chaque essai masse moléculaire moyenne en poids (Mw) a été mesurée par analyse GPC. On constate que les compositions obtenues lors des essais comparatifs 2 et 4 ont la viscosité et la masse moléculaire moyenne plus élevée ce qui peut être un indicateur d'une présence plus importante de traces produits de couplage issus de la réaction secondaire entre un groupe époxy et la fonction hydroxyle de l'hydroxylacrylate.

Les essais selon l'invention permettent d'obtenir le compromis recherché c'est-à-dire un procédé où le milieu réactionnel est homogène et limpide qui permet d'obtenir de très bons rendements et sélectivités en acrylatation tout en maîtrisant les réactions secondaires de couplage.

**2- Essais de préparation d'un revêtement anti-adhérent sur support souple**

A 70 g d'une huile polydiméthylsiloxane avec des motifs acrylates vendue sous le nom commercial de SILCOLEASE® UV POLY 110 (viscosité 880 mPA.s et 5,7% poids de groupe acrylate) sont ajoutés 30 g des compositions comprenant des polyorganosiloxanes à fonction acrylate obtenus selon les essais ci-dessus (voir tableau 1 et 2) et 2 g d'un photoamorceur radicalaire qui est l'éthyl (2,4,6-triméthylbenzoyl) phénylphosphinate.

Chacune de ces formulations est enduite sur un film LDPE GLD2 de la société Granger avec un taux de dépôt compris entre 0,9 et 1,1 $g/m^2$. Les échantillons de film enduit sont réticulés par une lampe UV de puissance 100 W/cm. La vitesse de défilement des échantillons enduits sous la lampe UV est de 200 m/min.

La qualité de la polymérisation et l'accrochage du revêtement ont été évalués par différents tests métiers.

La mesure de « Rub-Off » utilisée pour vérifier l'adhérence sur le support et la résistance à l'abrasion de la couche silicone consiste à frotter l'index sur le support siliconé pour imposer à la couche des contraintes mécaniques. On note le nombre d'aller-retour avec le doigt jusqu'à apparition du phénomène de rub-off (ou gommage), correspondant à une déchirure en lambeaux du revêtement silicone. La note de 1 indique une mauvaise résistance à l'abrasion de la couche silicone et la note de 10 indique une excellente résistance à l'abrasion de la couche silicone. Ce test d'application est noté de 1, le plus faible, à 10, le meilleur résultat.

Les échantillons selon l'invention présentent d'excellentes performances d'accrochage largement supérieures au comparatif 1.

## Revendications

1. Procédé pour la préparation d'une composition **X** comprenant au moins un organopolysiloxane **A** comportant au moins un groupe (méth)acrylate, ledit procédé comprenant les étapes suivantes:

   a) on fait réagir à une température entre 50 et 130°C, de préférence entre 70 et 130°C et encore plus préférentiellement entre 90 et 125°C, au moins un organopolysiloxane **B** comprenant au moins un groupe époxy avec de l'acide acrylique ou de l'acide méthacrylique ou un mélange des deux, en absence d'alcool et en présence :

   - d'un catalyseur **C** qui est un complexe de chrome au degré d'oxydation (III),
   - d'au moins 4,5% poids par rapport au poids total du milieu réactionnel de cette étape a) d'un solvant **S** et
   - d'un inhibiteur de polymérisation de l'acide acrylique ou de l'acide méthacrylique,

   b) on dévolatilise le milieu réactionnel obtenu à l'issue de l'étape a) et
   c) on obtient ladite composition **X** comprenant au moins un organopolysiloxane **A**.

2. Procédé selon la revendication 1 dans lequel à l'étape a) le ratio molaire entre l'acide acrylique et le ou les groupes époxy portés par l'organopolysiloxane **B** est supérieur à 1 et de de préférence compris entre 1,05 et 1,50, et encore plus préférentiellement entre 1,02 et 1,20.

3. Procédé selon la revendication 1 dans lequel la teneur en solvant **S** mise en œuvre à l'étape a) est comprise entre 4,5 et 20% massique, de préférence entre 4,5 et 15% massique et encore plus préférentiellement entre 5 et 15% massique, par rapport au poids total du milieu réactionnel mis en œuvre à ladite étape a) du procédé.

4. Procédé selon les revendications 1 ou 2 dans lequel le catalyseur **C** est un complexe de chrome au degré d'oxydation (III) de formule **(1)** suivante

$[Cr(L^1)_3]$ **(1)**

dans laquelle les symboles $L^1$ identiques ou différents représentent un anion carboxylate.

5. Procédé selon la revendication 4 dans lequel le catalyseur **C** est un carboxylate de chrome au degré d'oxydation (III) choisi parmi le groupe constitué par l'acrylate de chrome (III), le méthacrylate de chrome (III), l'acétate de chrome (III), le 2-ethylhexanoate de chrome (III), le néodécanoate de chrome (III) et leurs mélanges.

6. Procédé selon l'une quelconque des revendications précédentes dans lequel l'organopolysiloxane **B** comprend des motifs siloxyles **(I.1)** et **(I.2)** de formules suivantes:

$$Y_a Z^1_b SiO_{\frac{4-(a+b)}{2}} \quad \textbf{(I.1)}$$

et

$$Z^2_c SiO_{\frac{4-c}{2}} \quad \textbf{(I.2)}$$

dans lesquelles :

a= 1 ou 2, b= 0, 1 ou 2 et a+b= 1, 2 ou 3
c = 0,1, 2 ou 3
- les symboles Y, identiques ou différents, représentent un groupe hydrocarboné comprenant un groupe époxy et comprenant éventuellement en outre un ou plusieurs hétéroatomes tel qu'un atome d'oxygène, ledit groupe hydrocarboné Y ayant de préférence de 2 à 20 atomes de carbone inclus, et, plus préférentiellement encore Y est choisi parmi le groupe constitué par un alkylglycidyléther, un époxyalkyle linéaire, ramifié ou cyclique, un époxyalcényle linéaire, ramifié ou cyclique et un glycidyl-ester d'acide carboxylique;
- les symboles $Z^1$ et $Z^2$, identiques ou différents, représentent, un groupe hydrocarboné monovalent ayant de 1 à 30 atomes de carbone, de préférence choisi parmi le groupe constitué par les groupes alkyles ayant de 1 à 8 atomes de carbone et les groupes aryles ayant de 6 à 12 atomes de carbone, et encore plus préférentiellement choisis parmi le groupe constitué par un groupe méthyle, éthyle, propyle, 3,3,3-trifluoropropyle, xylyle, tolyle et phényle, et

ledit organopolysiloxane **B** comprend, par molécule, au moins deux atomes de silicium et au moins un motif siloxyle **(I.1)**.

7. Procédé selon la revendication précédente dans lequel pour le motif siloxyle **(I.1)** le symbole Y est choisi parmi le groupe constitué par les groupes hydrocarbonés **(R-1)** à **(R-6)** de formules suivantes :

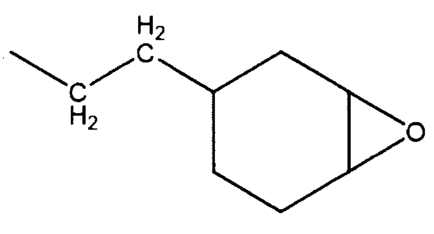

**(R-1)**

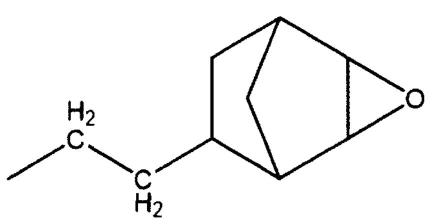

**(R-2)**

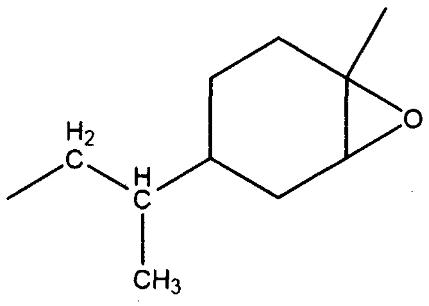

**(R-3)**

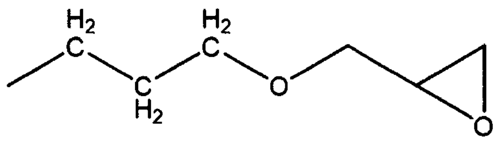

**(R-4)**

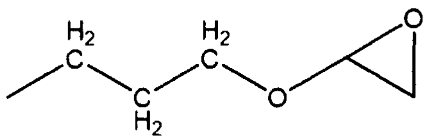

**(R-5)**

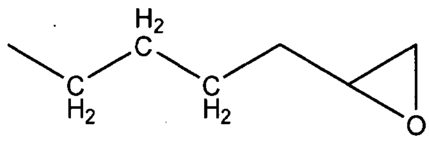

**(R-6)**

**8.** Procédé selon l'une quelconque des revendications précédentes dans lequel l'organopolysiloxane **B** contient de 1 à 60% poids de groupes hydrocarbonés Y comprenant un groupe époxy, de préférence de 1 à 30% poids et encore plus préférentiellement de 1 à 15% poids.

**9.** Procédé selon la revendication 1 dans lequel l'étape a) le solvant **S** est choisi parmi le groupe constitué par la méthylisobutylcétone, la méthyléthylcétone, le toluène, le xylène, le chlorobenzène et leurs mélanges.

**10.** Procédé selon la revendication 1 dans lequel l'étape a) le solvant **S** est la méthylisobutylcétone.

**11.** Composition **X** susceptible d'être obtenue par le procédé décrit dans l'une quelconque des revendications 1 à 10.

**12.** Procédé pour réaliser un revêtement sur un substrat comprenant les étapes suivantes:

a) on prépare une composition **X** selon le procédé de l'une quelconque des revendications 1 à 10,
b) on prépare une composition silicone **W** réticulable par voie radicalaire comprenant:

i. ladite composition **X**
ii. un photoamorceur, et
iii. éventuellement au moins un additif,

c) on applique ladite composition **W** sur un substrat, et
d) on fait réticuler ladite composition **W** par exposition à un rayonnement.

**13.** Procédé selon la revendication 12 dans lequel le rayonnement est de la lumière ultraviolette.

**14.** Procédé selon les revendications 12 ou 13 dans lequel l'étape d) de réticulation a lieu à une température comprise entre 40 et 100°C.

**15.** Procédé selon les revendications 12 à 14 où le substrat est en textile, en papier, en polychlorure de vinyle, en polyester, en polypropylène, en polyamide, en polyéthylène, en polyéthylène téréphtalate, en polyuréthane ou en fibres de verre non tissés.

**16.** Substrat comportant au moins un revêtement susceptible d'être obtenu selon le procédé tel que décrit dans les revendications 12 à 15.

## Patentansprüche

1. Verfahren zur Herstellung einer Zusammensetzung **X**, die mindestens ein Organopolysiloxan **A** mit mindestens einer (Meth)acrylatgruppe umfasst, wobei das Verfahren die folgenden Schritte umfasst:

   a) man setzt bei einer Temperatur zwischen 50 und 130 °C, vorzugsweise zwischen 70 und 130 °C und noch weiter bevorzugt zwischen 90 und 125 °C mindestens ein Organosiloxan **B** mit mindestens einer Epoxidgruppe mit Acrylsäure oder Methacrylsäure oder einer Mischung davon in Abwesenheit von Alkohol und in Gegenwart von:

      - einem Katalysator **C**, bei dem es sich um einen Komplex von Chrom in der Oxidationsstufe (III) handelt,
      - mindestens 4,5 Gew.-%, bezogen auf das Gesamtgewicht des Reaktionsmediums dieses Schritts a), eines Lösungsmittels **S** und
      - einem Inhibitor der Polymerisation von Acrylsäure oder Methacrylsäure um,

   b) man befreit das am Ende von Schritt a) erhaltene Reaktionsmedium von flüchtigen Bestandteilen, und
   c) man erhält die Zusammensetzung **X**, die mindestens ein Organopolysiloxan **A** umfasst.

2. Verfahren nach Anspruch 1, wobei in Schritt a) das Molverhältnis zwischen Acrylsäure und Epoxidgruppe(n) des Organopolysiloxans **B** >1 ist und vorzugsweise zwischen 1,05 und 1,50 und noch weiter bevorzugt zwischen 1,02 und 1,20 liegt.

3. Verfahren nach Anspruch 1, wobei der Gehalt an Lösungsmittel **S**, das in Schritt a) verwendet wird, zwischen 4,5 und 20 Massen-%, vorzugsweise zwischen 4,5 und 15 Massen-% und noch weiter bevorzugt zwischen 5 und 15 Massen-%, bezogen auf das Gesamtgewicht des in Schritt a) des Verfahrens verwendeten Reaktionsmediums, liegt.

4. Verfahren nach Anspruch 1 oder 2, wobei es sich bei dem Katalysator **C** um einen Komplex von Chrom in der Oxidationsstufe (III) der folgenden Formel **(1)** handelt:

   $$[Cr\ (L^1)_3] \qquad \mathbf{(1)}$$

   wobei die Symbole $L^1$ gleich oder verschieden sind und für ein Carboxylat-Anion stehen.

5. Verfahren nach Anspruch 4, wobei es sich bei dem Katalysator **C** um ein Carboxylat von Chrom in der Oxidationsstufe (III) aus der Gruppe bestehend aus Chrom(III)-acrylat, Chrom(III)-methacrylat, Chrom(III)-acetat, Chrom(III)-2-ethylhexanoat, Chrom(III)-neodecanoat und Mischungen davon handelt.

6. Verfahren nach einem der vorhergehenden Ansprüche, wobei das Organopolysiloxan **B** Siloxyleinheiten **(I.1)** und **(1.2)** der folgenden Formeln umfasst:

   $$Y_a Z^1_b SiO_{\frac{4-(a+b)}{2}} \qquad \mathbf{(I.1)}$$

   und

   $$Z^2_c SiO_{\frac{4-c}{2}} \qquad \mathbf{(I.2)}$$

   wobei

   a = 1 oder 2, b = 0, 1 oder 2 und a+b = 1, 2 oder 3,
   c = 1, 2 oder 3,
   - die Symbole Y gleich oder verschieden sind und für eine Kohlenwasserstoffgruppe mit einer Epoxidgruppe und gegebenenfalls außerdem einem oder mehreren Heteroatomen wie einem Sauerstoffatom stehen, wobei

die Kohlenwasserstoffgruppe Y vorzugsweise 2 bis 20 Kohlenstoffatome inklusive aufweist und Y noch weiter bevorzugt aus der Gruppe bestehend aus einem Alkylglycidylether, einem linearen, verzweigten oder cyclischen Epoxyalkyl, einem linearen, verzweigten oder cyclischen Epoxyalkenyl und einem Carbonsäureglycidylester ausgewählt ist;
- die Symbole $Z^1$ und $Z^2$ gleich oder verschieden sind und für eine einwertige Kohlenwasserstoffgruppe mit 1 bis 30 Kohlenstoffatomen stehen, vorzugsweise aus der Gruppe bestehend aus Alkylgruppen mit 1 bis 8 Kohlenstoffatomen und Arylgruppen mit 6 bis 12 Kohlenstoffatomen ausgewählt sind und noch weiter bevorzugt aus der Gruppe bestehend aus einer Methyl-, Ethyl-, Propyl-, 3,3,3-Trifluorpropyl-, Xylyl-, Tolyl- und Phenylgruppe ausgewählt sind, und
- das Organopolysiloxan **B** pro Molekül mindestens zwei Siliciumatome und mindestens eine Siloxyleinheit **(I.1)** umfasst.

7. Verfahren nach dem vorhergehenden Anspruch, wobei für die Siloxyleinheit **(I.1)** das Symbol Y aus der Gruppe bestehend aus den Kohlenwasserstoffgruppen **(R-1)** bis **(R-6)** der folgenden Formeln ausgewählt ist:

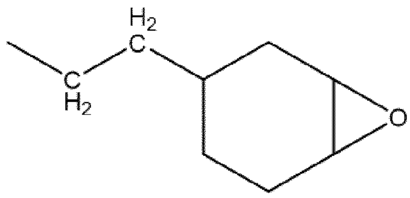

**(R-1)**

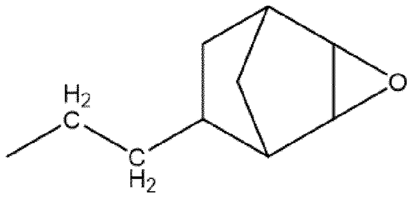

**(R-2)**

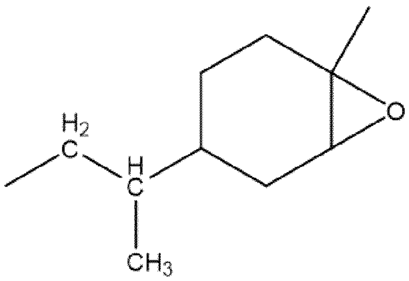

**(R-3)**

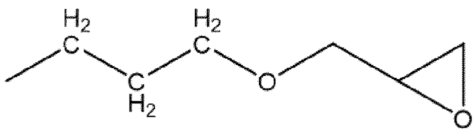

**(R-4)**

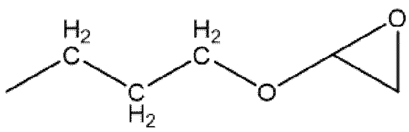

**(R-5)**

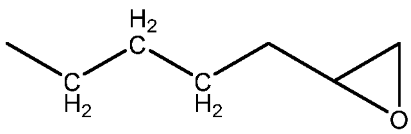

**(R-6)**

8. Verfahren nach einem der vorhergehenden Ansprüche, wobei das Organopolysiloxan **B** 1 bis 60 Gew.-% Kohlenwasserstoffgruppen Y mit einer Epoxidgruppe, vorzugsweise 1 bis 30 Gew.-% und noch weiter bevorzugt 1 bis 15 Gew.-%, enthält.

9. Verfahren nach Anspruch 1, wobei in Schritt a) das Lösungsmittel **S** aus der Gruppe bestehend aus Methylisobutylketon, Methylethylketon, Toluol, Xylol, Chlorbenzol und Mischungen davon ausgewählt wird.

10. Verfahren nach Anspruch 1, wobei es sich in Schritt a) bei dem Lösungsmittel **S** um Methylisobutylketon handelt.

11. Zusammensetzung **X**, die durch das in einem der Ansprüche 1 bis 10 beschriebene Verfahren erhältlich ist.

12. Verfahren zur Herstellung einer Beschichtung auf einem Substrat, das die folgenden Schritte umfasst:

a) man stellt nach dem Verfahren gemäß einem der Ansprüche 1 bis 10 eine Zusammensetzung **X** her,
b) man stellt eine radikalisch vernetzbare Silikonzusammensetzung **W** her, die

i. die Zusammensetzung **X**,
ii. einen Photoinitiator und
iii. gegebenenfalls mindestens ein Additiv umfasst,

c) man bringt die Zusammensetzung **W** auf ein Substrat auf und
d) man vernetzt die Zusammensetzung **W** durch Einwirkenlassen einer Strahlung.

**13.** Verfahren nach Anspruch 12, wobei es sich bei der Strahlung um Ultraviolettlicht handelt.

**14.** Verfahren nach Anspruch 12 oder 13, wobei der Vernetzungsschritt d) bei einer Temperatur zwischen 40 und 100 °C erfolgt.

**15.** Verfahren nach den Ansprüchen 12 bis 14, wobei das Substrat aus Textilstoff, Papier, Polyvinylchlorid, Polyester, Polypropylen, Polyamid, Polyethylen, Polyethylenterephthalat, Polyurethan oder Glasfaservliesstoffen besteht.

**16.** Substrat mit mindestens einer Beschichtung, die nach dem Verfahren gemäß den Ansprüchen 12 bis 15 erhältlich ist.

## Claims

**1.** A process for preparing a composition **X** comprising at least one organopolysiloxane **A** comprising at least one (meth)acrylate group, said process comprising the following steps:

a) at least one organopolysiloxane **B** comprising at least one epoxy group is reacted, at a temperature of between 50 and 130°C, preferably between 70 and 130°C and even more preferentially between 90 and 125°C, with acrylic acid or methacrylic acid or a mixture of the two, in the absence of alcohol and in the presence:

- of a catalyst **C** which is a complex of chromium in the oxidation state (III),
- of at least 4.5% by weight, relative to the total weight of the reaction medium of this step a), of a solvent **S** and
- of an inhibitor of polymerization of acrylic acid or of methacrylic acid,

b) the reaction medium obtained at the end of step a) is devolatilized and
c) said composition **X** comprising at least one organopolysiloxane **A** is obtained.

**2.** The process as claimed in claim 1, wherein, in step a) , the molar ratio between the acrylic acid and the epoxy group(s) borne by the organopolysiloxane **B** is greater than 1 and preferably between 1.05 and 1.50, and even more preferentially between 1.02 and 1.20.

**3.** The process as claimed in claim 1, wherein the content of solvent **S** used in step a) is between 4.5% and 20% by weight, preferably between 4.5% and 15% by weight and even more preferentially between 5% and 15% by weight, relative to the total weight of the reaction medium used in said step a) of the process.

**4.** The process as claimed in claim 1 or 2, wherein the catalyst **C** is a complex of chromium in the oxidation state (III), of formula **(1)** below

$$[Cr(L^1)_3] \qquad \textbf{(1)}$$

wherein the symbols $L^1$, which may be identical or different, represent a carboxylate anion.

**5.** The process as claimed in claim 4, wherein the catalyst **C** is a carboxylate of chromium in the oxidation state (III), chosen from the group consisting of chromium(III) acrylate, chromium(III) methacrylate, chromium(III) acetate, chromium(III) 2-ethylhexanoate, chromium(III) neodecanoate and mixtures thereof.

**6.** The process as claimed in any one of the preceding claims, wherein the organopolysiloxane **B** comprises siloxyl units **(I.1)** and **(I.2)**, of formulae below:

$$Y_aZ^1_bSiO_{\frac{4-(a+b)}{2}} \quad \text{(I.1)}$$

and

$$Z^2_cSiO_{\frac{4-c}{2}} \quad \text{(I.2)}$$

wherein:

a = 1 or 2, b = 0, 1 or 2 and a + b = 1, 2 or 3,
c = 0, 1, 2 or 3,
- the symbols Y, which may be identical or different, represent a hydrocarbon-based group comprising an epoxy group and optionally also comprising one or more heteroatoms, such as an oxygen atom, said hydrocarbon-based group Y preferably having from 2 to 20 carbon atoms inclusive, and, even more preferentially, Y is chosen from the group consisting of an alkyl glycidyl ether, a linear, branched or cyclic epoxyalkyl, a linear, branched or cyclic epoxyalkenyl and a carboxylic acid glycidyl ester;
- the symbols $Z^1$ and $Z^2$, which may be identical or different, represent a monovalent hydrocarbon-based group having from 1 to 30 carbon atoms, preferably chosen from the group consisting of alkyl groups having from 1 to 8 carbon atoms and aryl groups having from 6 to 12 carbon atoms, and even more preferentially chosen from the group consisting of a methyl, ethyl, propyl, 3,3,3-trifluoropropyl, xylyl, tolyl and phenyl group; and

said organopolysiloxane **B** comprising, per molecule, at least two silicon atoms and at least one siloxyl unit **(I.1)**.

7. The process as claimed in the preceding claim, wherein, for the siloxyl unit **(I.1)**, the symbol Y is chosen from the group consisting of the hydrocarbon-based groups **(R-1)** to **(R-6)** of formulae below:

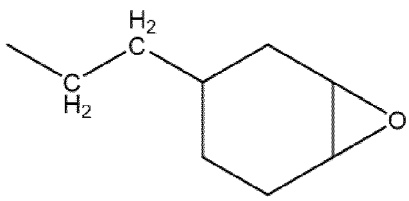

(R-1)

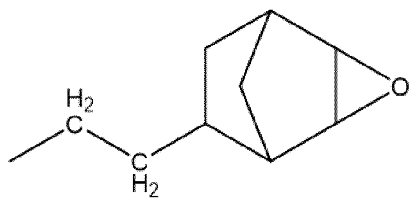

(R-2)

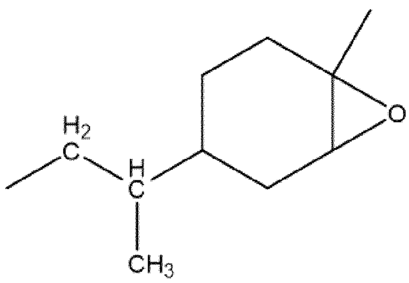

(R-3)

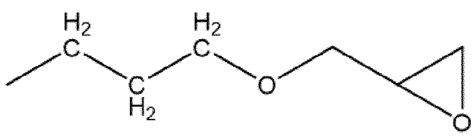

(R-4)

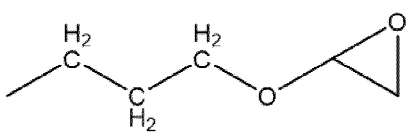

(R-5)

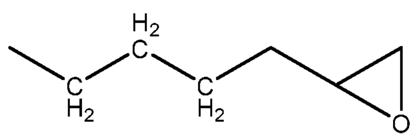

(R-6)

8. The process as claimed in any one of the preceding claims, wherein the organopolysiloxane **B** contains from 1%

to 60% by weight of hydrocarbon-based groups Y comprising an epoxy group, preferably from 1% to 30% by weight and even more preferentially from 1% to 15% by weight.

**9.** The process as claimed in claim 1, wherein, in step a), the solvent **S** is chosen from the group consisting of methyl isobutyl ketone, methyl ethyl ketone, toluene, xylene, chlorobenzene and mixtures thereof.

**10.** The process as claimed in claim 1, wherein, in step a), the solvent **S** is methyl isobutyl ketone.

**11.** A composition **X** which can be obtained by means of the process described in any one of claims 1 to 10.

**12.** A process for producing a coating on a substrate, comprising the following steps:

a) a composition **X** is prepared according to the process of any one of claims 1 to 10,
b) a radically crosslinkable silicone composition **W** is prepared, comprising:

i. said composition **X**,
ii. a photoinitiator, and
iii. optionally at least one additive,

c) said composition **W** is applied to a substrate, and
d) said composition **W** is crosslinked by exposure to radiation.

**13.** The process as claimed in claim 12, wherein the radiation is ultraviolet light.

**14.** The process as claimed in claim 12 or 13, wherein the crosslinking step d) is carried out at a temperature of between 40 and 100°C.

**15.** The process as claimed in claims 12 to 14, wherein the substrate is made of textile, paper, polyvinyl chloride, polyester, polypropylene, polyamide, polyethylene, polyethylene terephthalate, polyurethane or nonwoven glass fibers.

**16.** A substrate comprising at least one coating which can be obtained according to the process as described in claims 12 to 15.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 2632960
- EP 1276825 B1
- EP 1276825 A
- EP 281718 A
- EP 940458 A